(19) **Europäisches Patentamt**
**European Patent Office**
**Office européen des brevets**

(11) **EP 1 594 204 B1**

(12) **EUROPÄISCHE PATENTSCHRIFT**

(45) Veröffentlichungstag und Bekanntmachung des Hinweises auf die Patenterteilung:
**13.06.2007 Patentblatt 2007/24**

(51) Int Cl.:
*H02G 3/30* (2006.01)

(21) Anmeldenummer: **05405237.8**

(22) Anmeldetag: **10.03.2005**

(54) **Deckenstütze**

Ceiling support

Support de plafond

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **08.05.2004 CH 8092004**
**29.11.2004 EP 04405740**

(43) Veröffentlichungstag der Anmeldung:
**09.11.2005 Patentblatt 2005/45**

(73) Patentinhaber: **ZURECON AG**
**CH-8003 Zürich (CH)**

(72) Erfinder: **Pfluger, Gerd**
**4625 Oberbuchsiten (CH)**

(74) Vertreter: **Rutz, Peter**
**RUTZ & PARTNER**
**Postfach 4627**
**6304 Zug (CH)**

(56) Entgegenhaltungen:
**EP-A- 0 732 788**    **DE-A- 10 216 112**
**DE-A1- 3 008 510**    **DE-B1- 1 816 413**
**FR-A- 2 692 643**    **GB-A- 2 390 753**
**US-A- 5 118 066**

**Beschreibung**

Die Erfindung betrifft eine der Montage insbesondere von Kabelführungsvorrichtungen; Rohrleitungen und Deckenkonstruktionen dienende Deckenstütze nach dem Oberbegriff des Patentanspruchs 1.

In Gewerbe-, Industrie- und Verwaltungsgebäuden werden Kabel für Stark- und Schwachstromnetze infolge fehlender Eigenstabilität, im Gegensatz zu Rohren, in kanalartige Vorrichtungen wie Kabelführungsvorrichtungen gelegt, und so beispielsweise von einem Schaltfeld zu den Verbrauchern geführt. Kabelführungsvorrichtungen dieser Art sind beispielsweise aus [1], Produktkatalog der LANZ OENSINGEN AG, April 2003, bekannt.

In [1], Seite 10 sind Gitterbahnen, in [1], Seite 18 sind Multibahnen und in [1], Seite 34 sind Weitspann-Multibahnen gezeigt, die je nach der Art und Menge der zu verlegenden Kabel und der vorliegenden Gebäudeverhältnisse zur Anwendung kommen.

Das zur Montage an Decken dienende Trägermaterial für Kabelführungsvorrichtungen besteht normalerweise aus einer sogenannten Deckenstütze, mit der ein Ausleger verbindbar ist. Auf den mit der Deckenstütze verbundenen Ausleger, der jeweils waagrecht ausgerichtet ist, werden die Kabelführungsvorrichtungen abgelegt, wie dies in [1] gezeigt ist.

Die aus [1] bekannte, normalerweise aus Stahl verzinkt oder Stahl rostfrei bestehende Deckenstütze weist eine mit der Decke verschraubbare Platte auf, die mit einem meist gelochten, stab- oder rohrförmigen Profilteil verschweisst, verschraubt oder auf eine andere Art fest verbunden ist.

Nach der Montage der Deckenstütze kann der Ausleger auf passender Höhe mit einer Seitenwand der in der Regel U-förmigen Profilteil verschraubt, oder darin eingehängt werden.

Aufgrund der schweren Lasten sind Deckenstützen dieser Art hohen Belastungen ausgesetzt, weshalb entsprechend gross dimensionierte Vorrichtungen aus verhältnismässig dickem Stahlblech eingesetzt werden. Auch das oben genannte Verschrauben oder Einhängen von Auslegern auf passender Höhe bedingt massives Blech, und zwar für die Seitenwände. An herkömmlichen Deckenstützen können herkömmliche Ausleger nämlich nur an einer Seitenwand, allenfalls an einer Seitenwand und einer Rückwand, nicht aber zugleich an zwei einander gegenüberliegenden Seitenwänden des stab- oder rohrförmigen Profilteils befestigt werden.

Um die Deckenstützen an der Decke stabil zu montieren, werden sie jeweils mit mehreren Montageschrauben an der Decke befestigt.

Insgesamt resultiert für die Herstellung der Deckenstützen dadurch ein hoher Material- und Fertigungsaufwand. Auch das präzise Anbringen der Bohrungen an den Betondecken für mehrere Montageschrauben ist, wie in der EP 1 428 972 A2 beschrieben, mit hohem Aufwand verbunden.

Eine Deckenstütze gemäß dem Oberbegriff des Anspruchs 1 ist aus der Auslegeschrift DE 1 816 413 bekannt.

Der vorliegenden Erfindung liegt daher die Aufgabe zugrunde, eine mit geringerem Materialaufwand herstellbare und mit geringerem Zeitaufwand montierbare Deckenstütze zu schaffen.

Diese Aufgaben werden mit einer Deckenstütze gelöst, welche die in Anspruch 1 angegebenen Merkmale aufweist. Vorteilhafte Ausgestaltungen der Erfindung sind in weiteren Ansprüchen angegeben.

Die Deckenstütze, die insbesondere der Montage einer Kabelführungsvorrichtung dient, weist ein mit einer Decke verbundenes Endstück und ein daran anschliessenden Verbindungsstück auf, an dessen unterem Ende ein Ausleger vorgesehen ist, auf den die zu tragende Last abgelegt werden kann.

Erfindungsgemäss ist die Deckenstütze nur mittels einer einzigen am Endstück vorgesehenen Montageschraube an der Decke montiert und auf der der Last abgewandten Seite wenigstens mittels eines Stützelements, das in einem zweiten Abstand L2 entfernt von der Montageschraube angeordnet ist, gegen die Decke abgestützt. Dadurch wird das Lastmoment mit der in einem ersten Abstand L1 von der Montageschraube einwirkenden Lastkraft $F_L$ durch das Gegenmoment mit der im zweiten Abstand L2 von der Decke auf das Stützelement einwirkenden Gegenkraft $F_D$ praktisch vollständig kompensiert.

Durch diese Massnahme wird eine wesentliche Reduktion der Zugkraft $F_S$ erzielt, die auf diese einzige Montageschraube einwirkt. Sofern der zweite Abstand L2 genügend gross gewählt wird, entspricht die Grösse der Zugkraft $F_S$ etwa der Kraft $F_L$, die von der gehaltenen Last einwirkt.

Die erfindungsgemässe Deckenstütze kann somit ausreichend solide nur mittels einer einzigen Montageschraube befestigt werden, die vorzugsweise exzentrisch gegen die Last verschoben ist. Die Krafteinwirkungen von den Stützelementen auf die Decke erfolgen praktisch punktuell, so dass innerhalb der Deckenstütze vorteilhafte Kraftverläufe resultieren, die zu einer erhöhten Belastbarkeit der Deckenstütze führen.

Das Endstück kann mit dem Verbindungsstück einstückig, oder mittels Schweissen oder Toxen verbunden sein. Ferner kann das Verbindungsstück endseitig selbst das Endstück bilden, indem es oben mit zwei einander gegenüberliegenden Öffnungen versehen wird, durch die wenigstens ein mittels der Montageschraube mit der Decke verbundenes Montageprofil hindurchgeführt oder in die ein mittels der Montageschraube mit der Decke verbundener Nutenstein eingedreht wird.

Zur Bildung des wenigstens einen Stützelements kann das mit dem Verbindungsstück verbundene Endstück wenigstens an der der Last abgewandten Seite auch ein Fusselement aufweisen. Sofern ein gegebenenfalls mit der Decke verbundenes Montageprofil in das Verbindungsstück eingesetzt ist, kann dessen der Last abgewandtes Ende oder ein dort vorgesehenes Verbindungsstück, beispielsweise eine darin eingesetzte Schraube, das Stützelement bilden.

Sofern das Verbindungsstück beispielsweise mittels eines Nutensteins mit der Decke verbunden ist, wird vorzugsweise ein Verbindungsstück verwendet, das wenigstens an der der Last abgewandten Seite mit punkt- oder linienförmigen Stützelementen versehen ist. Beispielsweise sind die Profilelemente des Verbindungsstücks oder die dortigen Kanten vereinzelt, über das Verbindungsstück hinaus ragend, nach oben gegen die Decke geführt.

End- und Verbindungsstück können beispielsweise ein- oder mehrteilige U-Profile, oder ein- oder mehrteilige Rechteckprofile sein. Das Verbindungsstück kann auch aus wenigstens einer auf Zug und einer auf Druck belasteten Säule gebildet werden, die hintereinander senkrecht zum Ausleger angeordnet sind. Zur Aufnahme des Auslegers (unten) und gegebenenfalls eines Montageprofils (oben) ist das Verbindungsstück vorzugsweise mit je zwei auf gleicher Höhe einander gegenüber liegenden Fensteröffnungen versehen.

In vorzugsweisen Ausgestaltungen kann das Endstück an der der Last zu- und abgewandten Seite gegen die Decke ragende Stützelemente aufweisen, so dass das Endstück eine parallel zum Ausleger verlaufende Brücke bildet. Dadurch kann der die Last tragende Ausleger auf der einen oder anderen Seite der Deckenstütze angeordnet sein. Idealerweise steht das Endstück nur mittels der Montageschraube und den Stützelementen und gegebenenfalls mittels einer bei der Montageschraube vorgesehenen Vertiefung in Kontakt mit der Decke.

Zur Bildung eines Stützelements kann ferner ein ausschliesslich dazu dienendes Montageprofil in die Deckenstütze eingesetzt werden. Ferner kann der mit der Last versehene Ausleger auf der der Last abgewandten Seite ein an der Decke anliegendes Stützelement aufweisen.

In einer weiteren vorzugsweisen Ausgestaltung wird die Montageschraube exzentrisch auf der der Last zugewandten Seite der Deckenstütze montiert, so dass der zweite Abstand L2 vorzugsweise maximal ist, wodurch das Lastmoment $F_L$ * L1 reduziert wird und eine entsprechend reduzierte Kraft $F_D$ von der Decke über die Stützelemente auf die Deckenstütze einwirkt.

In einer weiteren vorzugsweisen Ausgestaltung besteht die Deckenstütze aus zwei identischen vorzugsweise stapelbaren Vorrichtungsteilen.

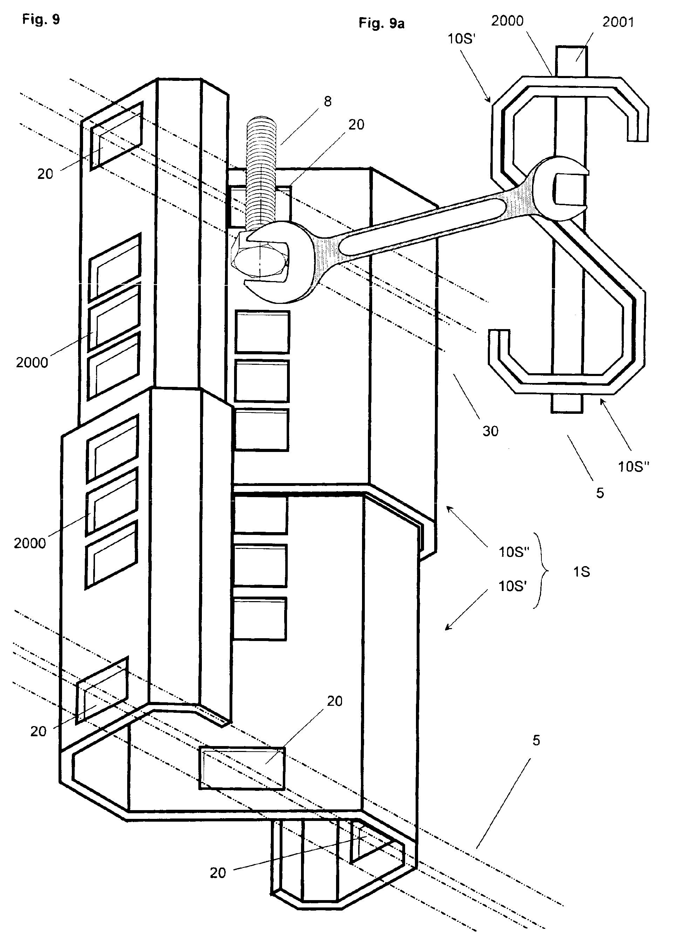

Als besonders vorteilhaft hat sich die Verwendung von zwei vorzugsweise identischen Vorrichtungsteilen erwiesen, die ein S-Profil aufweisen. Aufgrund des S-Profils weisen die Vorrichtungteile eine hohe Steifigkeit auf, so dass mit einfach biegbaren Teilen eine ausserordentlich stabile Deckenstütze realisierbar ist, die mit einfachen Massnahmen herstellbar, montierbar und in der Höhe verstellbar ist (siehe Figur 9).

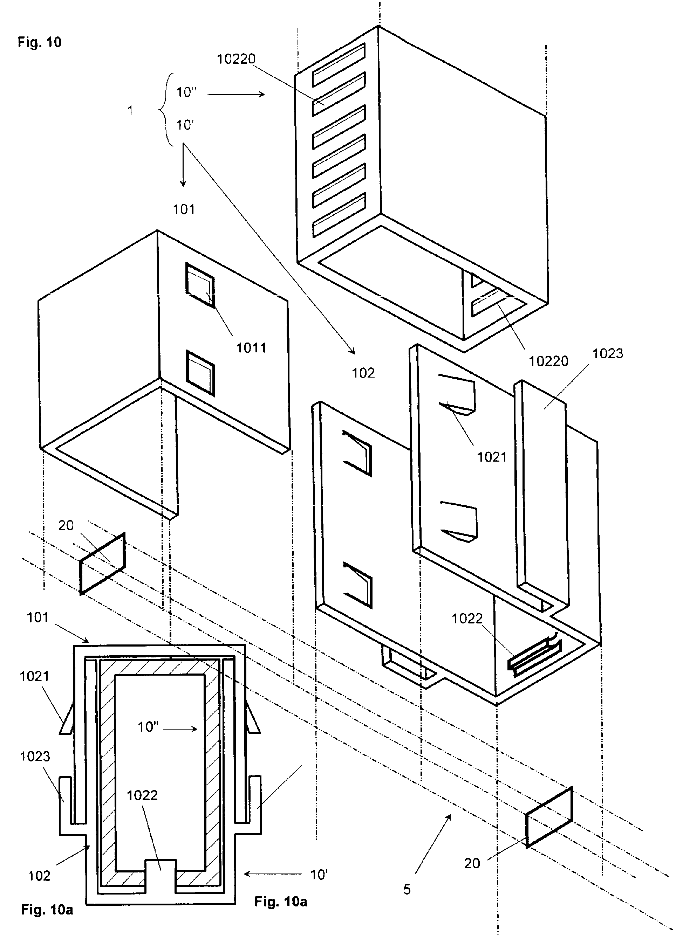

Eine höhenverstellbare Deckenstütze kann auch vorteilhaft realisiert werden, indem das mit dem Ausleger versehene Vorrichtungsteil zweiteilig, mit einem Halteteil und einem Verschlussteil, ausgestaltet wird, welche, das erste Vorrichtungsteil umschliessend und in dieses in gewünschter Höhe eingehängt, formschlüssig miteinander verbindbar sind (siehe Figur 10).

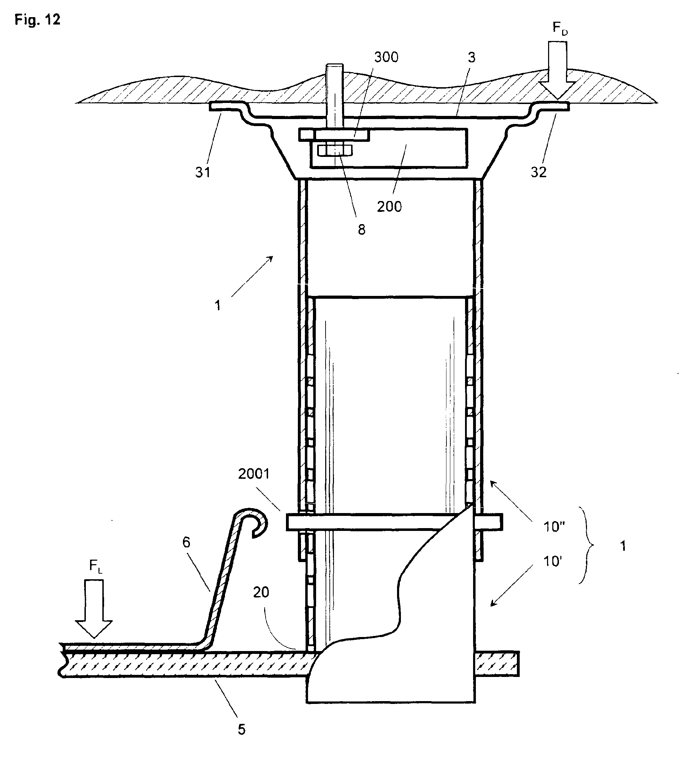

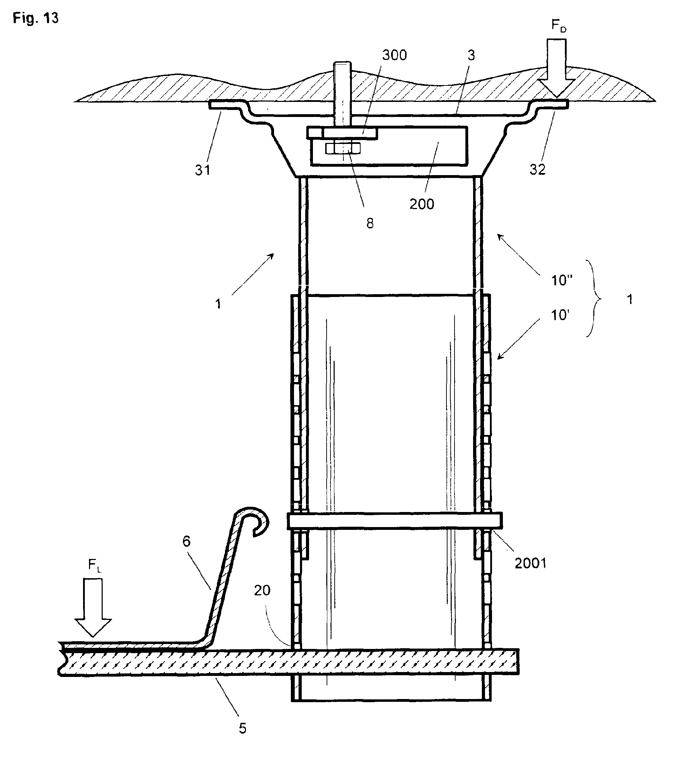

Damit die Stütze nicht einzig und allein deswegen aus dickem Blech hergestellt werden muss, damit die Ausleger höhenverstellbar verschraubt oder eingehängt werden können, nämlich an entsprechend stabil dimensionierten Seitenwänden, wird vorzugsweise ein entweder innen im Kastenprofil höhenverstellbares zweites teleskopartig verschiebbares weiteres Kastenprofil angebracht, oder eine aussen entlang dem Kastenprofil in der Höhe verschiebbare Vorrichtung montiert. Nicht der Ausleger ist also höhenverstellbar montierbar, sondern höhenverstellbar ist ein zusätzlicher Vorrichtungsteil, an welchem der Ausleger immer auf gleicher Höhe, nämlich zuunterst, angebracht ist (siehe die Figuren 12 und 13).

Nachfolgend wird die Erfindung, einschliesslich weiterer vorzugsweiser Ausgestaltungen, anhand von Zeichnungen beispielsweise näher erläutert. Dabei zeigt:

Figur 1    eine in der Höhe verstellbare aus zwei Teilen 10', 10" bestehende erfindungsgemässe Deckenstütze 1, die nur mit einer Montageschraube 8 mit der Decke 9 verbunden und mit Endstücken 3', 3" versehen ist, die seitlich angeordnete Stützelemente 31, 32 aufweisen;

Figur 2    eine aus zwei Teilen 10', 10" bestehende erfindungsgemässe Deckenstütze 1, die nur mit einer Montageschraube 8 mit der Decke 9 verbunden und die dekkenseitig mit einem gegebenenfalls verlängerbaren Montageprofil 30x versehen ist, welches in einem zweiten Abstand L2 von der Montageschraube 8 gegen die Decke 9 abgestützt ist;

Figur 3    eine aus zwei Teilen 10', 10" bestehende erfindungsgemässe Deckenstütze 1, die nur mit einer Montageschraube 8 mit der Decke 9 verbunden ist und deren Ausleger 5 die von der Last 6 einwirkende Kraft mittels eines Stützelements 320 direkt auf die Decke 4 überträgt, so dass lediglich Zugkräfte auf die weiteren Teile 2, 3 der Deckenstütze 1 einwirken;

Figur 4    einen ersten Schnitt A-A durch eine weitere, in Figur 6 gezeigte, kastenförmige Deckenstütze 1;

Figur 5    einen zweiten Schnitt B-B durch die in Figur 6 gezeigte Deckenstütze 1;

Figur 6 die in den Figuren 3 und 4 in Schnittdarstellungen gezeigte Deckenstütze 1, die nur mit einer Montageschraube 8 mit der Decke 9 verbunden und mittels eines von der Montageschraube 8 gehaltenen Montageprofils 30 gegen die Decke 9 abgestützt ist;

Figur 7 die mittels eines Nutensteins 300 und einer exzentrisch angeordneten Montageschraube 8 montierte Deckenstütze 1 von Figur 6 mit randseitigen Fusselementen 31, 32 anstelle des Montageprofils 30 und exzentrisch angeordneter Montageschraube 8;

Figur 7a den Nutenstein 300 von Figur 7 in zwei Positionen;

Figur 8 die Deckenstütze 1 von Figur 6 in U-Profilförmiger, einteiliger Ausgestaltung mit exzentrisch angeordneter Montageschraube 8 und einem elastischen Abschlussstück 35;

Figur 8a einen Schnitt D-D durch die in Figur 8 gezeigte Deckenstütze 1;

Figur 9 eine aus zwei identischen, S-Profil-förmigen Vorrichtungsteilen 10S', 10S'' bestehende höhenverstellbare erfindungsgemässe Deckenstütze 1S, die mittels einer einzigen, exzentrisch angeordneten Montageschraube 8 installiert wird;

Figur 10 eine höhenverstellbare erfindungsgemässe Deckenstütze 1, die aus zwei Vorrichtungsteilen 10', 10'' besteht von denen eines zweiteilig ausgestaltet ist;

Figur 10a einen Schnitt durch die montierten Vorrichtungsteile 10' , 10'' ;

Figur 11 eine weitere erfindungsgemässe Deckenstütze 1 mit einem brückenförmigen Endstück 3, das mit nur einer exzentrisch angeordneten Montageschraube 8 mit der Decke und mit zwei Säulen 210, 220 mit dem Ausleger 5 verbunden ist;

Figur 12 die Deckenstütze 1 von Figur 11 mit kastenförmigen Vorrichtungsteilen 10', 10'' , die ineinander verschiebbar sind; und

Figur 13 die Deckenstütze 1 von Figur 11 mit kastenförmigen Vorrichtungsteilen 10', 10'', die ineinander verschiebbar sind.

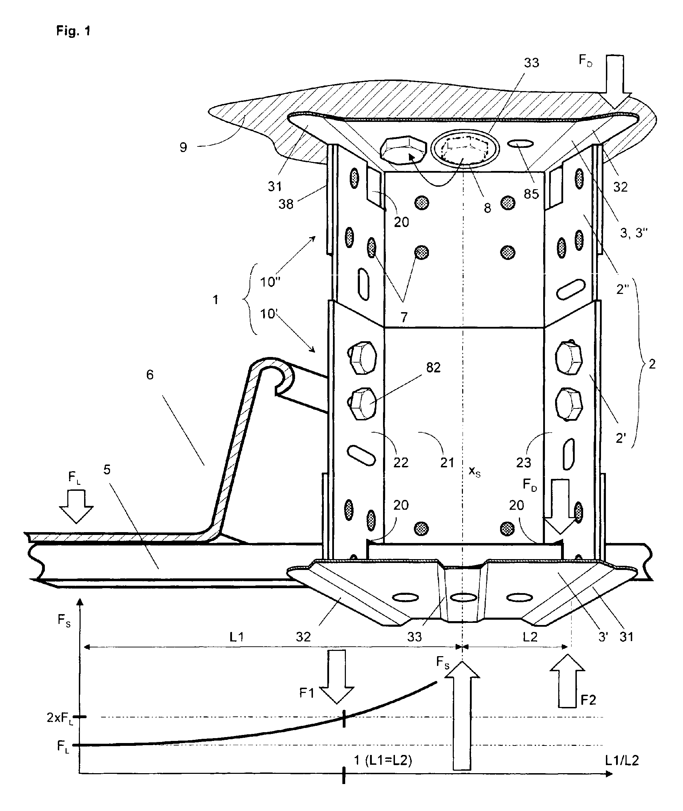

Figur 1 zeigt eine erfindungsgemässe Deckenstütze 1, die aus zwei identischen, mittels Schrauben 82 miteinander verbundenen Vorrichtungsteilen 10', 10'' besteht. Jedes der Vorrichtungsteile 10', 10'' weist ein Endstück 3', 3'' und ein damit verbundenes Verbindungsstück 2', 2'' auf, das aus drei gegeneinander geneigten plattenförmigen Elementen, einem Mittelelement 21 und zwei Seitenelementen 22, 23 besteht. Die beiden Seitenelemente 22, 23, an deren Unterseiten der Durchführung eines Auslegers 5 dienende Fensteröffnungen 20 vorgesehen sind, sind gegenüber dem Mittelelement 21 um etwa 60° nach aussen geneigt, so dass ein stark geöffnetes, stapelbares U-Profil resultiert.

Das plattenförmige Endstück 3', 3'', das mittels Flanschen 38 sowie Niet-, Füge-, Tox- oder Schweissverbindungen 7, oder zumindest teilweise einstückig mit dem Verbindungsstück 2', 2'' verbunden ist, weist der Aufnahme einer Montageschraube 8 dienende Bohrungen 85 auf. Betreffend die Fertigung von Toxverbindungen siehe beispielsweise die TOX®-Blechverbindungssysteme der TOX® PRESSOTECHNIK GmbH & Co. KG, D-88250 Weingarten. Zur Verstärkung des Verbindungsstücks 2, 2' kann dieses mit beispielsweise achsparallel verlaufenden Sicken versehen sein, durch die eine erhöhte Steifigkeit erzielt wird.

Die beiden Vorrichtungsteile 10', 10'' sind derart miteinander verbunden, dass deren Endstücke 3', 3'' voneinander abgewandt sind, so dass das obere Endstück 3'' mittels der Montageschraube 8 mit der Decke 9 verbunden werden kann und das untere Endstück 3' die Deckenstütze 1 nach unten abschliesst und gegebenenfalls den eingesetzten, beispielsweise C-Profil- oder U-Profil-förmigen Ausleger 5 stützt, der die Last, nämlich eine Kabelführungsvorrichtung 6 trägt.

Die Deckenstütze 1 von Figur 1 weist nebst der Stapelbarkeit der Vorrichtungsteile 10', 10'' viele weitere Vorteile auf. Für die weiteren Betrachtungen ist es jedoch nicht von Bedeutung, ob die Deckenstütze 1 aus einem oder zwei Teilen gefertigt ist. Die beiden miteinander verbundenen Verbindungsstück 2', 2'' treten nachstehend als Verbindungsstück 2 der Deckenstütze in Erscheinung. Das Endstück 3'' des oberen Vorrichtungsteils 10'' bildet das eigentliche Endstück 3 der Deckenstütze 1. Für den Ausleger 5 können auf verschiedenen Höhen entsprechende Fensteröffnungen 20 vorgesehen sein.

In Figur 1 sind ferner die Kräfte $F_L$, $F_S$ und $F_D$ eingezeichnet, die auf den Ausleger 5 einwirken, der in die nur mit einer Montageschraube 8 befestigte Deckenstütze 1 eingeführt ist. Durch die gehaltene Kabelführungsvorrichtung 6 wird die Kraft $F_L$ in den als Hebel wirkenden Ausleger 5 eingeleitet, der an dem der Kabelführungsvorrichtung 6 zugewandten Seitenelement 22 der Deckenstütze 1 eine Zugkraft F1 und an dem der Kabelführungsvorrichtung 6 abgewandten Seitenelement 23 der Deckenstütze 1 eine Druckkraft F2 einleitet. Dazu korrespondierend wirkt von der Montageschraube 8 eine Zugkraft $F_S$ und von der Decke 9, an der Position des abgewandten Seitenelements 23 eine Druckkraft $F_D$ auf die Deckenstütze 1 ein. In Figur 1 sind ferner die ersten und zweiten Abstände L1, L2 zwischen den Wirkungslinien der Zugkraft $F_S$ und der durch die Last bewirkten Kraft $F_L$ bzw. der Zugkraft $F_S$ und der von der Decke einwirkenden Druckkraft $F_D$ eingezeichnet. Die von der Montageschraube 8 zu erbringende Zugkraft $F_S$ ist vom Verhältnis L1/L2 der Abstände L1, L2 und der Last $F_L$ wie folgt abhängig:

$$F_S = (L1/L2 + 1) \, F_L$$

Für den Spezialfall L1 = 0 gilt: $\quad F_S = F_L$
Für den Spezialfall L1 = L2 gilt: $\quad F_S = 2 \, F_L$

Der Verlauf der Zugkraft $F_S$, in Abhängigkeit der Grösse der ersten und zweiten Abstände L1, L2 und der Last $F_L$, ist in Figur 1 anhand eines Diagramms gezeigt.

Aus diesem Diagramm ist ersichtlich, dass der zweite Abstand L2, und somit die Breite der Deckenstütze 1, möglichst gross sein soll, um bei gegebener Last eine möglichst kleine Zugkraft $F_S$ zu erzielen. Daher ist es vorteilhaft, die Montageschraube 8 exzentrisch möglichst nahe bei der Last anzuordnen. Durch eine grössere Breite der Deckenstütze 1 gelingt es ferner, das einwirkende Drehmoment sicher aufzufangen, wodurch ein Einknicken der Deckenstütze 1 vermieden wird.

Damit die obigen Feststellungen zutreffen ist es wichtig, dass die Krafteinleitungen in die Deckenstütze 1 an den in Figur 1 bezeichneten Position erfolgen, wobei die Krafteinleitung von der Decke 9 möglichst weit von der Montageschraube 8 vorzugsweise punktuell oder entlang einer Linie erfolgen soll.

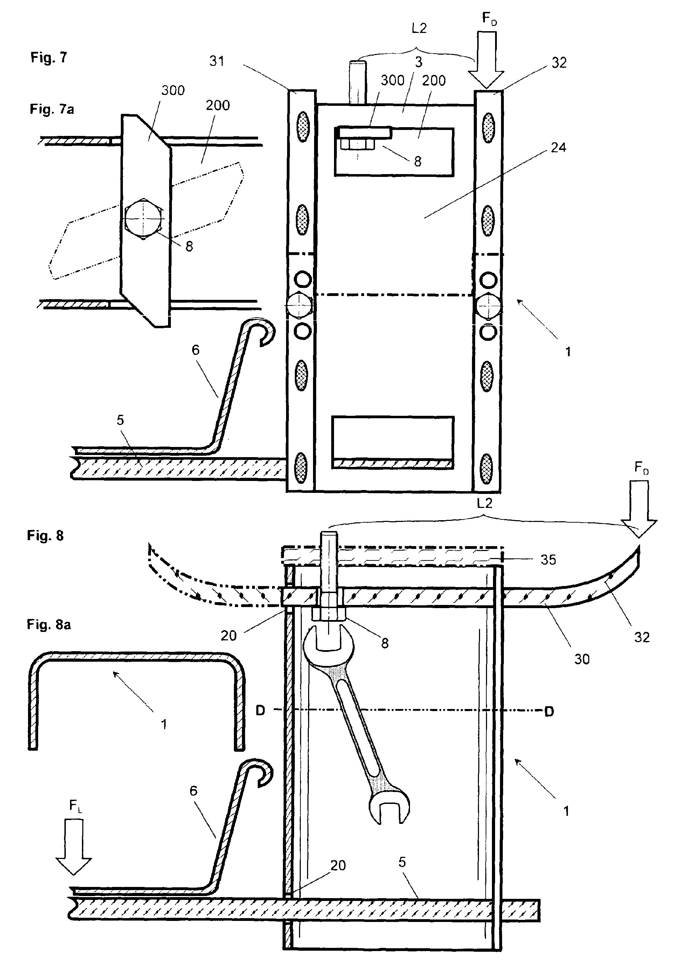

Die Verwendung nur einer Montageschraube 8 erlaubt eine punktuelle Einleitung der Zugkraft $F_S$ von der Decke 9. Das Endstück 3 ist vorzugsweise brückenförmig ausgestaltet und weist zumindest an dessen der Last abgewandten Seite ein der Einleitung der Kraft $F_D$ dienendes Fusselement 32 auf. Sofern das Endstück 3 nicht über eine genügend hohe Stabilität verfügt, kann im Bereich der Bohrungen 85, die der Aufnahme der Montageschraube 8 dienen, mittels Vertiefungen oder Sicken 33 verhindert werden, dass das Endstück 3 breitflächig gegen die Decke 9 gedrückt wird und Druckkräfte $F_D$ auf das Endstück 3 einwirken. Sofern die Montageschraube 8 nur Zugkräfte an einem Punkt aufnimmt, kann die Deckenstütze 1 um diesen Punkt um das erforderliche Mass in einer Ebene parallel zum Ausleger 5 gedreht werden, bis das oder die Stützelemente 32 an die Decke 9 anstossen. Um dies zu gewährleisten kann beispielsweise eine elastische Unterlagsscheibe oder ein entsprechendes elastisches oder deformierbares Element 35 (siehe Figur 8) unterhalb des Endstücks 3 vorgesehen werden, das gleichzeitig einen ästhetisch einwandfreien Abschluss bildet.

In der in Figur 1 gezeigten Ausgestaltung ist das Endstück 3 beidseits mit nach unten gebogenen Rändern versehen, durch die Stützelemente 31, 32 gebildet werden.

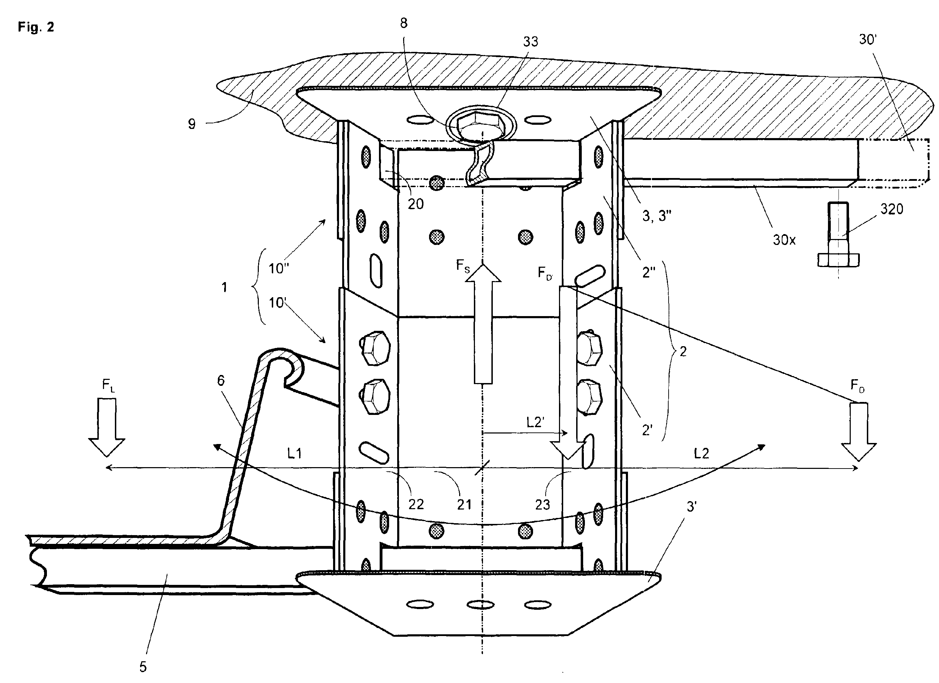

Figur 2 zeigt die Deckenstütze 1 von Figur 1 in einer weiteren vorzugsweisen Ausgestaltung, bei der die im rechten Seitenelement 23 wirkende Druckkraft des Auslegers 5 nicht auf das Endstück 3, sondern über ein gegebenenfalls verlängerbares Montageprofil 30x auf die Decke 9 abgeleitet wird. Das Montageprofil 30x ist, in der Art des Auslegers 5, deckenseitig in Fensteröffnungen 20 eingesetzt und ragt von der Last abgewandt aus der Deckenstütze 1 heraus. An dessen Ende weist das Montageprofil 30x eine gegen die Decke 9 drehbare Justierschraube 320 auf, die als Stützelement dient. Durch die Verwendung des Montageprofils 30x wird der zweite Abstand L2 deutlich erhöht und die von der Decke 9 einwirkende Kraft $F_D$ reduziert, ohne dass die Deckenstütze 1 breiter ausgestaltet ist.

Sofern das Montageprofil 30x an einem Ende und der Ausleger 5 am anderen Ende der Deckenstütze 1 gehalten ist, wirken die beiden Drehmomente $F_L * L1$ und $F_D * L2$ auf die Deckenstütze 1 ein, was bei stabiler Ausgestaltung der Deckenstütze 1 auch bei der Anwendung grösserer Lasten $F_L$ keine Probleme verursacht.

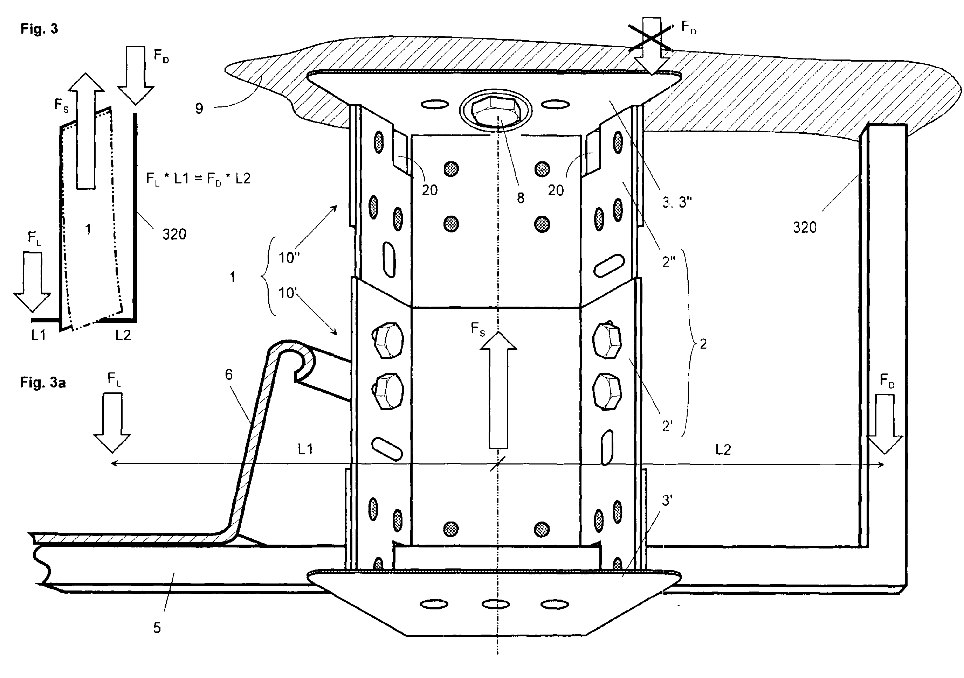

Die Einwirkung von Drehmomenten, $F_L * L1$ und $F_D * L2$, auf die Deckenstütze 1 kann mit der in Figur 3 gezeigten Ausgestaltung jedoch gänzlich vermieden werden. Bei dieser Ausgestaltung wird nicht nur die von der Last verursachte Kraft $F_L$, sondern auch die von der Decke 9 ausgeübte Gegenkraft $F_D$, beispielsweise über das gezeigte Stützelement, direkt auf den Ausleger 5 übertragen. Da die Einwirkungen von Drehmomente praktisch vollständig vermieden wird, kann die Deckenstütze 1 vereinfacht, im Wesentlichen unter Berücksichtigung der maximal auftretenden Zugkräfte $F_D$, ausgelegt bzw. auf einen Zugstab reduziert werden.

Damit sichergestellt wird, dass das am Ausleger 5 vorgesehene Stützelement 320 an die Decke 9 anstösst und somit die erforderliche Gegenkraft $F_D$ aufnehmen und übertragen kann, wird beispielsweise, wie in Figur 2 gezeigt, ein variables oder elastisches Stützelement 320 vorgesehen. Möglich ist ferner, die auf Zug belastete Deckenstütze 1 elastisch oder vorzugsweise nur in der Ebene, in der der Ausleger 5 liegt, schwenkbar oder gelenkig drehbar auszugestalten, wodurch sich die resultierenden Drehmomente $F_L * L1$ und $F_D * L2$ vollständig kompensieren (siehe Figur 3a). Die Deckenstütze 1 wird daher nur auf Zug belastet und kann daher vorteilhaft dimensioniert werden.

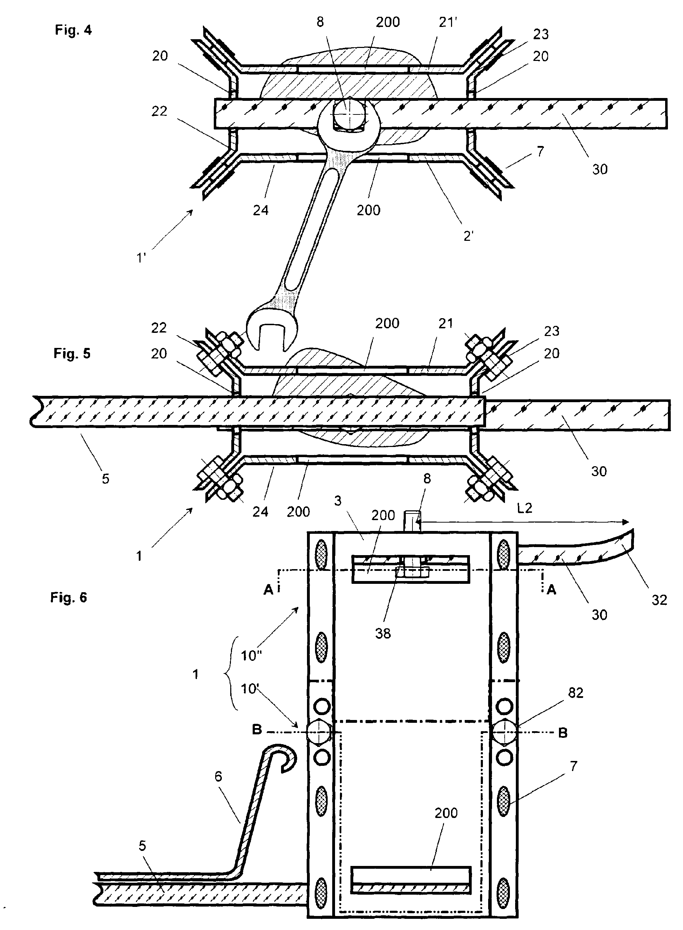

Die Deckenstütze 1 kann unter Berücksichtigung der Erfindungsidee auch in anderer Weise vorteilhaft ausgestaltet werden. In den Figuren 4, 5 und 6 ist gezeigt, dass die Deckenstütze 1 bzw. deren Vorrichtungsteile 10', 10" aus vier Seitenteilen 21, 22, 23, 24 gebildet werden kann, die zu einem Rechteckprofil zusammengefügt werden. Anstelle der in Figur 1 gezeigten plattenförmigen Endstücke 3 weisen die Vorrichtungsteile 1, 1' an den zwei einander gegenüber liegenden Seitenteilen 22, 23 Öffnungen 20 auf, die lastseitig der Aufnahme des Auslegers 5 und deckenseitig der Aufnahme eines Montageprofils 30 dienen. Das Montageprofil 30 weist eine der Durchführung der Montageschraube 8 dienende Öffnung 38 auf und kann somit zusammen mit der Deckenstütze 1 an der Decke 9 montiert werden. In den beiden anderen einander gegenüber liegenden Seitenteilen 21, 24 sind Öffnungen 200 vorgesehen, durch die ein zum Anziehen der Montageschraube 8 dienendes Werkzeug in das Rechteckprofil einführbar ist.

Die Seitenteile 21, 22, 23, 24 weisen vorzugsweise nach aussen abgewinkelte seitliche Randelemente auf, die aneinander liegen und mittels Schraub- und/oder Toxverbindungen miteinander verbunden sind.

Figur 4 zeigt einen ersten Schnitt A-A durch die in Figur 6 gezeigte Deckenstütze 1, die mittels der Montageschraube 8 an der Decke 9 befestigt ist. Das Montageprofil 30 ist durch die Öffnung 30 im Seitenteil 23 nach aussen geführt und stösst in einem zweiten Abstand L2 von der Montageschraube 8 an die Decke 9 an, um dort die von der Decke 9 einwirkende Kraft $F_D$ aufzunehmen.

Figur 5 zeigt einen zweiten Schnitt B-B durch die in Figur 6 gezeigte Deckenstütze 1. Daraus ist ersichtlich, dass der dem Tragen einer Last 6 dienende Ausleger 5 durch die Öffnung 20 im Seitenteil 22 nach aussen geführt ist, das dem Seitenteil 23 gegenüberliegt. Wie in Figur 8 gezeigt ist auch eine symmetrische Ausgestaltung der Deckenstütze 1 mit zwei Montageprofilen 30 realisierbar, die auf den einander gegenüberliegenden Seiten 22, 23 aus der Deckenstütze 1 hervortreten und die je in den beiden einander gegenüberliegenden Fensteröffnungen 20 sowie von der Montageschraube 8 gehalten sind. Die Enden der Montageprofile 30 sind nach oben, gegen die Decke 9 gebogen und bilden dadurch die Stützelemente 32.

Figur 7 zeigt die Deckenstütze 1 von Figur 6 mit an den Ecken angeordneten Stützelementen 32, die die Gegenkraft $F_D$ von der Decke 9 aufnehmen. Die Öffnungen 200, die an den parallel zum Ausleger 5 verlaufenden Seitenelementen 24 vorgesehen sind, erlauben nicht nur die Einführung eines Werkzeugs, sondern auch die Verankerung eines Nutensteins 300, der in die Deckenstütze 1 eingeführt, in die Öffnungen 200 eingedreht und mittels der Montageschraube 8 festgezogen wird (siehe Figur 7a). In der Deckenstütze 1 ist die Montageschraube 8 soweit wie möglich gegen die Last verschoben, um das Lastmoment zu minimieren.

Figur 8 zeigt eine Deckenstütze 1 in U-Profil-förmiger, einteiliger Ausgestaltung mit exzentrisch montierter Montageschraube 8 und einem elastischen Abschlussstück 35. Figur 8a zeigt den in Figur 8 markierten Schnitt D-D durch die Deckenstütze 1. Es zeigt sich, dass aufgrund des hohen zweiten Abstands L2 nur eine geringe Belastung der Deckenstütze 1 resultiert. Das elastische Abschlussstück 35 schliesst die Deckenstütze 1 oben ästhetisch vorteilhaft ab, verhindert ein Wackeln der Deckenstütze 1, wenn noch keine oder nur leichte Kabel in die Kabelführungsvorrichtung 6 eingelegt sind und erlaubt die erforderliche Neigung unter Last bis das Stützelement 32 auf die Decke 9 auftrifft.

Figur 9 zeigt eine aus zwei identischen, S-Profil-förmigen Vorrichtungsteilen 10S', 10S'' bestehende höhenverstellbare Deckenstütze 1S, die mittels einer einzigen, exzentrisch angeordneten Montageschraube 8 installiert wird. Die Vorrichtungteile 10S', 10S'' weisen drei aufeinander ausgerichtete Öffnungen 20 auf, welche erlauben, einen Ausleger 5 oder eine Montageprofil 30 hindurch zu führen. Das Montageprofil 30 wird (wie bei der in Figur 8 gezeigten Deckenstütze 1) mit einer Montageschraube 8 befestigt, die exzentrisch innerhalb der der Last näher liegenden S-Schlaufe angeordnet ist. Das zum Festziehen der Montageschraube 8 dienende Werkzeug kann problemlos in dieselbe S-Schlaufe eingeführt werden. Zusätzliche Fenster zur Durchführung des Werkzeugs sind nicht notwendig.

Wie in Figur 9a gezeigt, können die Vorrichtungteile 10S', 10S'' ineinander verschoben und fixiert werden. Dazu können die Vorrichtungteile 10S', 10S'' mit mehreren Fensterreihen 2000 versehen sein, die bei einer gewünschten Höheneinstellung übereinander gefahren und dann von einem Arretierelement 2001 durchstossen werden. Möglich sind natürlich weitere fachmännische Massnahmen zur Verbindung dieser beiden Teile 10S', 10S''.

Die S-förmige Deckenstütze 1S weist zahlreiche Vorteile auf. Die Herstellung der identischen Vorrichtungteile 10S', 10S'' ist ausserordentlich einfach und kostengünstig. Ein flaches Blech kann vorgelocht bzw. mit den Öffnungen 20, 2000 versehen und anschliessend gestanzt und gebogen werden. Durch die S-Form erhalten die Vorrichtungteile 10S', 10S'' eine hohe Festigkeit. Die Montage dieser Deckenstütze 1S ist noch einfacher als die Montage einer kastenförmigen Deckenstütze, da die Montageschraube 8 leicht zugänglich ist. Weiterhin ist von Vorteil, dass die der Last entfernte S-Schlaufe einen stabilen Fuss bildet, über den das das Lastmoment $L1*F_L$ kompensierende Gegenmoment $L2*F_D$ auf die Deckenstütze 1S übertragen wird. Interessanterweise wird mittels des Gegenmoments $L2*F_D$ die Deckenstütze 1S weiter stabilisiert, da die entsprechende S-Schlaufe pfeilerartig gegen die Decke angeschlagen wird. Von Bedeutung bei dieser Ausgestaltung ist ferner die Kombination von vorteilhafter Funktionalität mit einer ästhetisch optimalen Erscheinung, was auch im Bereich der Installationstechnik vermehrt von Bedeutung ist.

Figur 10 zeigt eine höhenverstellbare erfindungsgemässe Deckenstütze 1, die aus zwei Vorrichtungteilen 10', 10'' besteht, von denen eines aus einem U-Profil-förmigen Halteteil 102 und einem U-Profil-förmigen Verschlussteil 101 besteht, die miteinander verbunden ein Rechteck- oder Kastenprofil bilden. Die Montage des Auslegers 5 und des Montageprofils 30 erfolgt auch bei dieser Ausgestaltung, wie beispielsweise in den Figuren 8 und 9, vorzugsweise mittels Fensteröffnungen 20 und wird nicht weiter erläutert. Die Montage dieser Deckenstütze 1 und eines Auslegers 5 kann jedoch auf jede andere dem Fachmann bekannte Art erfolgen.

Das obere Vorrichtungsteil 10'' ist einteilig ausgestaltet und mit wenigstens einer Reihe von Öffnungen 10220 versehen, in die hinein, ein Halteelement 1022 einführbar ist, das am Mittelteil des Halteteils 102 und/ oder des Verschlussteils 101 angeordnet ist. Das Halteteil 102 und/oder das Verschlussteil 101 können daher, sofern vorhanden, an passender Höhe in eine Öffnung 10220 eingehängt werden. Nach dem Einhängen des Halteteils 102 und/oder des Verschlussteils 101 soll dieses fixiert und gleichzeitig ein Kastenprofil gebildet werden. Das Halteteil 102 und das Verschlussteil 101 sind daher mit Mitteln 1011, 1021, 1023 versehen, welche erlauben, diese beiden Teile formschlüssig miteinander zu verbinden. Vorzugsweise wird ein Schnappverschluss gebildet, indem wie beispielsweise gezeigt, eines der Teile bzw. das Halteteil 101 an den Seitenelementen mit Öffnungen 1011 versehen wird, in die hinein Ankerelemente 1021 des anderen Teils bzw. des Verschlussteils 101 einrasten können. Damit die Ankerelemente 1021 nicht mehr aus den Öffnungen austreten können, werden die Seitenelemente des Verschlussteils 101 unter Halteleisten 1023, die am Halteteil 102 vorgesehen sind, eingeführt und dadurch fixiert. Die einseitig oder beidseitig durch die Öffnungen 10220 eingeführten Halteelement 1022 bleiben nach der Verbindung des Halteteils 102 und des Verschlussteils 101 im Vorrichtungsteil 10" verankert, wie dies in Figur 10a gezeigt ist.

Zur Installation dieser Deckenstütze 1 wird zuerst das einteilige Vorrichtungsteil 10" an der Decke montiert, wonach das Halteteil 102 in passender Weise in dieses eingehängt und mittels des Verschlussteils 101 fixiert wird. Die Mittel zur Verbindung des Halteteils 102 und des Verschlussteils 101 können in diese eingestanzt und, wie auch die Halteelemente 1022 und der Flügel 1023, aus diesen ausgeschnitten und ausgebogen werden und erlauben die formschlüssige Verbindung der beiden Teile 101, 102. In Figur 10 sind nur die der Verbindung der Vorrichtungsteile 10', 10" dienenden Elemente ausschnittweise gezeigt. Durch strichpunktierte Linien ist angedeutet, dass die gezeigten Elemente nach unten bzw. oben verlängert sind.

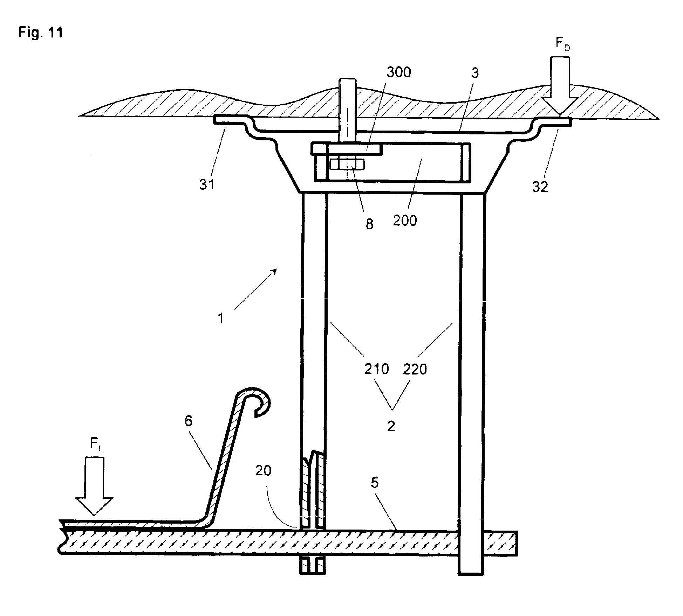

Figur 11 zeigt eine weitere erfindungsgemässe Deckenstütze 1 mit einem brückenförmigen Endstück 3, das mit der exzentrisch angeordneten Montageschraube 8 und dem Nutenstein 300 mit der Decke 9 und mit zwei Säulen 210, 220 mit dem Ausleger 5 verbunden ist.

Figur 12 und Figur 13 zeigen die Deckenstütze 1 von Figur 11 mit kastenförmigen Vorrichtungsteilen 10', 10" , die ineinander verschiebbar sind. Das untere Vorrichtungsteil 10' ist in der Ausgestaltung von Figur 12 ist innen liegend und in der Ausgestaltung von Figur 13 aussen liegend angeordnet.

Sofern entsprechende Seitenteile beim oberen Vorrichtungsteil 10" an entsprechenden Stellen ganz oder teilweise ausgeschnitten sind, kann das untere Vorrichtungsteil 10' mit dem Ausleger 5 vollständig in das obere Vorrichtungsteil 10" eingefahren werden.

**Patentansprüche**

1. Deckenstütze (1) insbesondere zur Montage einer Kabelführungsvorrichtung (6), mit einem mit einer Decke (9) verbundenen Endstück (3) und einem daran anschliessenden Verbindungsstück (2), das mit einem Ausleger (5) versehen ist, auf den die zu tragende Last (6) abgelegt werden kann, **dadurch gekennzeichnet, dass** die Deckenstütze (1) nur mittels einer am Endstück (3) vorgesehenen Montageschraube (8) an der Decke (9) montiert und auf der der Last (6) abgewandten Seite wenigstens mittels eines Stützelements (32, 320), das in einem zweiten Abstand (L2) entfernt von der Montageschraube (8) angeordnet ist, gegen die Decke (9) abgestützt ist, so dass das Lastmoment mit der in einem ersten Abstand (L1) von der Montageschraube (8) einwirkenden Kraft ($F_L$) der Last durch das Gegenmoment mit der im zweiten Abstand (L2) von der Decke (9) auf das Stützelement (32, 320) einwirkenden Gegenkraft ($F_D$) praktisch vollständig kompensiert wird.

2. Deckenstütze (1) nach Anspruch 1, **dadurch gekennzeichnet, dass** das Endstück (3) ein mit dem Verbindungsstück (2) verbundenes Element ist oder dass das Verbindungsstück (2) endseitig das Endstück (3) bildet und dazu mit zwei einander gegenüberliegenden Öffnungen (20; 200) versehen ist; durch die wenigstens ein mittels der Montageschraube (8) mit der Decke (9) verbundenes Montageprofil (30) hindurchgeführt ist, oder in die ein mittels der Montageschraube (8) mit der Decke (9) verbundener Nutenstein (300) eingedreht ist.

3. Deckenstütze (1) nach Anspruch 1 oder 2, **dadurch gekennzeichnet, dass** das mit dem Verbindungsstück (2) verbundene Endstück (3) wenigstens an der der Last abgewandten Seite ein als Stützelement (32) dienendes Fusselement aufweist, oder, dass das in das Verbindungsstück (2) eingesetzte Montageprofil (30) an dem der Last abgewandten Ende oder ein dort vorgesehenes Verbindungsstück das Stützelement (32) bildet.

4. Deckenstütze (1) nach Anspruch 1, 2 oder 3, **dadurch gekennzeichnet, dass** das das Verbindungsstück (2) wenigstens an der der Last abgewandten Seite mit punkt- oder linienförmigen Stützelementen (32) versehen ist.

5. Deckenstütze (1) nach einem der Ansprüche 1 - 4, **dadurch gekennzeichnet, dass** das Verbindungsstück (2) ein ein- oder mehrteiliges U-Profil oder ein ein- oder mehrteiliges Rechteckprofil ist oder dass das Verbindungsstück (2) wenigstens eine auf Zug und eine auf Druck belastete Säule (21, 22) aufweist.

6. Deckenstütze (1) nach einem der Ansprüche 1 - 5, **dadurch gekennzeichnet, dass** das Endstück (3) an der der Last zu- und abgewandten Seite gegen die Decke (9) ragende Stützelemente (31, 32) aufweist und/oder dass das Endstück (3) eine parallel zum Ausleger (5) verlaufende Brücke bildet.

7. Deckenstütze (1) nach Anspruch 1 oder 2, **dadurch gekennzeichnet, dass** ein nicht mit der Decke (9) verschraubtes Montageprofil (30x) vorgesehen ist, dessen der Last abgewandtes Ende oder ein dort vorgesehenes Verbindungsstück das Stützelement (32) bildet oder dass der Ausleger (5) auf der der Last abgewandten Seite ein an der Decke (9) anliegendes Stützelement (320) aufweist.

8. Deckenstütze (1) nach einem der Ansprüche 1 - 7, **dadurch gekennzeichnet, dass** das Endstück (3) nur mittels der Montageschraube (8) und den Stützelementen (31, 32), und gegebenenfalls mittels einer bei der Montageschraube (8) vorgesehenen Vertiefung (33) in Kontakt mit der Decke (9) steht.

9. Deckenstütze (1) nach einem der Ansprüche 1 - 8, **dadurch gekennzeichnet, dass** die Montageschraube (8) exzentrisch auf der der Last zugewandten Seite der Deckenstütze (1) montiert ist, so dass der Abstand (L2) vorzugsweise maximal ist.

10. Deckenstütze (1) nach einem der Ansprüche 1 - 9, **dadurch gekennzeichnet, dass** zwei miteinander verbundene identische Vorrichtungteile (10', 10'') vorgesehen sind, von denen das erste mit der Decke (9) und das zweite mit dem Ausleger (5) verbunden ist.

11. Deckenstütze (1) nach einem der Ansprüche 1 - 9, **dadurch gekennzeichnet, dass** zwei miteinander verbundene Vorrichtungteile (10S', 10S'') vorgesehen sind, die ein S-Profil aufweisen.

12. Deckenstütze (1) nach einem der Ansprüche 1 - 10, **dadurch gekennzeichnet, dass** ein mit der Decke (9) montierbares erstes Vorrichtungteil (10') mit wenigstens einer Reihe von Öffnungen (10220) und ein zweites Vorrichtungteil (10'') vorgesehen sind, das aus einem Haltteil (101) und einem Verschlussteil (102) besteht, welche das erste Vorrichtungteil (10') umschliessend formschlüssig miteinander verbindbar sind, und von denen, wenigstens das Haltteil (101) und/oder das Verschlussteil (102) ein in eine Öffnung (10220) einführbares Halteelement (1022) aufweist.

**Claims**

1. Ceiling support (1), in particular, for the purpose of installing a cable routing device (6), comprising an end piece (3) attached to a ceiling (9) and a connection piece (2) attaching thereto which is provided with a bracket (5) on which the load (6) to be carried can be laid, **characterized in that** the ceiling support (1) is mounted on the ceiling (9) only by one mounting bolt (8) provided on the end piece (3) and is supported against the ceiling (9) on the side opposite the load (6) at least by one support element (32, 320) which is located at a second distance (L2) from the mounting bolt (8) such that the load torque with the force (FL) of the load applied by the mounting bolt (8) at a first distance (L1) is essentially completely compensated by the counter-torque with the counterforce (FD) applied to the support element (32, 320) by the ceiling (9) at the second distance (L2).

2. Ceiling support (1) according to Claim 1, **characterized in that** the end piece (3) is an element attached to the connection piece (2), or that one end of the connection piece (2) forms the end piece (3) and is provided for this purpose with two opposing openings (20; 200) through which at least one mounting profile (30) attached to the ceiling (9) by the mounting bolt (9) is inserted, or into which a t-slot nut (300) attached to the ceiling (9) by the mounting bolt (8) is screwed in.

3. Ceiling support (1) according to Claims 1 or 2, **characterized in that** the end piece (3) attached to the connection piece (2) has, at least on the side opposite the load, a base element serving as a support element (32), or, that the mounting profile (30) inserted into the connection piece (2) forms the support element (32) at the end opposite the load, or a connection piece provided there forms said support element.

4. Ceiling support (1) according to Claims 1, 2 or 3, **characterized in that** the connection piece (2) is provided with punctiform or linear support elements (32) at least on the side opposite the load.

5. Ceiling support (1) according to one of Claims 1 - 4, **characterized in that** the connection piece (2) is a one-piece or multi-piece U-profile, or a one-piece or multi-piece rectangular profile, or that the connection piece (2) has at least one pillar (21, 22) loaded in tension and one loaded in compression.

6. Ceiling support (1) according to one of Claims 1 - 5, **characterized in that** the end piece (3) has support elements (31, 32) projecting against the ceiling (9) on the sides facing and opposite the load, and/or that the end piece (3) forms a bridge (5) running parallel to the bracket (5).

7. Ceiling support (1) according to Claims 1 or 2, **characterized in that** a mounting profile (30x) is provided, which profile is not bolted to the ceiling (9), the end of which opposite the load, or a connection piece there provided, forms the support element (32); or that the bracket (5) on the side opposite the load has a support element (320) contacting the ceiling (9).

**8.** Ceiling support (1) according to one of Claims 1 - 7, **characterized in that** the end piece (3) is in contact with the ceiling (9) only by the mounting bolt (8) and the support elements (31, 32), and optionally by a recess provided in the mounting bolt (8).

**9.** Ceiling support (1) according to one of Claims 1 - 8, **characterized in that** the mounting bolt (8) is installed eccentrically on the side of the ceiling support (1) facing the load such that the second distance (L2) is preferably at its maximum.

**10.** Ceiling support (1) according to one of Claims 1 - 9. **characterized in that** two mutually attached identical fixture parts (10S', 10S'') are provided, of which the first is attached to the ceiling (9) and the second is attached to the bracket (5).

**11.** Ceiling support (1) according to one of Claims 1 - 9, **characterized in that** two mutually attached fixture parts (10', 10'') are provided which have an S-profile.

**12.** Ceiling support (1) according to one of Claims 1 - 10, **characterized in that** a first fixture part (10') mountable on the ceiling (9) is provided with at least one row of openings (10220), and a second fixture part (10'') is provided composed of a retaining component (101) and a closing component (102) which are mutually attachable in a form-locking manner so as to enclose the first fixture part (10'), and of which at least the retaining component (101) and/or the closing component (102) has a retaining element (1022) insertable into an opening (10220).

**Revendications**

**1.** Etai (1) en particulier pour le montage d'un dispositif de guidage de câbles (6), comprenant une pièce d'extrémité (3) reliée à un plafond (9) et continuée par une pièce de jonction (2), qui est munie d'une flèche (5) sur laquelle peut être déposée la charge à porter (6), **caractérisé en ce que** l'étai (1) n'est monté au plafond (9) qu'au moyen d'une vis de montage (8) prévue sur la pièce d'extrémité (3) et est soutenu contre le plafond (9) sur le côté détourné de la charge (6) au moins au moyen d'un élément support (32, 320) qui est disposé éloigné à une seconde distance (L2) de la vis de montage (8) de sorte que le moment de charge est compensé pratiquement entièrement avec la force ($F_L$) de la charge agissant dans une première distance (L1) de la vis de montage (8) par le couple antagoniste avec la force antagoniste ($F_D$) agissant dans la seconde distance (L2) du plafond (9) sur l'élément support (32, 320).

**2.** Etai (1) selon la revendication 1, **caractérisé en ce que** la pièce d'extrémité (3) est un élément relié à la pièce de jonction (2) ou **en ce que** la pièce de jonction (2) forme à l'extrémité la pièce d'extrémité (3) et est munie pour ce faire de deux ouvertures opposées (20; 200) à travers lesquelles est guidé au moins un profilé de montage (30) relié au plafond (9) au moyen de la vis de montage (8) ou bien dans laquelle est vissé un écrou pour rainure à T (300) relié au plafond (9) au moyen d'une vis de montage (8).

**3.** Etai (1) selon la revendication 1 ou 2, **caractérisé en ce que** la pièce d'extrémité (3) reliée à la pièce de jonction (2) présente au moins sur la face détournée de la charge un élément de base servant d'élément support (32), ou **en ce qu'**une pièce de jonction qui est prévu sur l'extrémité détournée de la charge du profilé de montage (30) introduit dans la pièce de jonction (2) forme l'élément support (32).

**4.** Etai (1) selon la revendication 1, 2 ou 3, **caractérisé en ce que** la pièce de jonction (2) est munie au moins sur la face détournée de la charge d'éléments support (32) punctiformes ou linéaires

**5.** Etai (1) selon l'une des revendications 1 à 4, **caractérisé en ce que** la pièce de jonction (2) est un profilé en U en une ou plusieurs parties ou un profilé rectangulaire en une ou plusieurs parties, ou **en ce que** la pièce de jonction (2) présente au moins une colonne (21, 22) sollicitée en pression ou en traction.

**6.** Etai (1) selon l'une des revendications 1 à 5, **caractérisé en ce que**, la pièce d'extrémité (3) présente, sur la face tournée et détournée de la charge, des éléments support (31, 32) se dressant en direction du plafond (9) et/ou **en ce que** la pièce d'extrémité (3) forme une passerelle s'étendant parallèlement à la flèche (5).

**7.** Etai (1) selon la revendication 1 ou 2, **caractérisé en ce qu'**il est prévu un profilé de montage (30x) non vissé dans le plafond (9) dont l'extrémité détournée de la charge ou une pièce de jonction prévue ici forme l'élément de support (32), ou bien **en ce que** la flèche (5) présente sur la face détournée de la charge un élément support (320) appliqué au plafond (9).

**8.** Etai (1) selon l'une des revendications 1 à 7, **caractérisé en ce que** la pièce d'extrémité (3) n'est en contact avec le plafond (9) qu'au moyen de la vis de montage (8) et des éléments support (31, 32), et éventuellement au moyen d'une cavité (33) prévue à proximité de la vis de montage (8).

9. Etai (1) selon l'une des revendications 1 à 8, **caractérisé en ce que** la vis de montage (8) est montée excentrique sur la face de l'étai (1), détournée de la charge de sorte que la distance (L2) est de préférence maximale.

10. Etai (1) selon l'une des revendications 1 à 9, **caractérisé en ce qu'**il est prévu deux parties de dispositifs (10', 10") identiques reliées entre elles dont la première est reliée au plafond (9) et la seconde est reliée à la flèche (5).

11. Etai (1) selon l'une des revendications 1 à 10, **caractérisé en ce qu'**il est prévu deux parties de dispositif (10S', 10S'') reliées entre elles, présentant un profilé en S.

12. Etai (1) selon l'une des revendications 1 à 10, **caractérisé en ce qu'**il est prévu une première partie de dispositif (10') montable avec le plafond (9) avec au moins une série d'ouvertures (10220) et une seconde partie de dispositif (10") qui se compose d'une partie de retenue (101) et d'une partie de fermeture (102) qui sont reliables entre elles par adhérence des formes en entourant la première partie de dispositif (10') et dont au moins la partie de retenue (101) et/ou la partie de fermeture (102) présente un élément de retenue (1022) insérable dans une ouverture (10220).

EP 1 594 204 B1

**Fig. 1**

Fig. 2

Fig. 3

Fig. 3a

$F_L * L1 = F_D * L2$

Fig. 4

Fig. 5

Fig. 6

EP 1 594 204 B1

Fig. 7

Fig. 7a

Fig. 8

Fig. 8a

15

**Fig. 9**

**Fig. 9a**

Fig. 10

Fig. 10a

Fig. 10a

Fig. 11

**Fig. 12**

**Fig. 13**

EP 1 594 204 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1428972 A2

- DE 1816413